# EUROPEAN PATENT APPLICATION

(11) **EP 4 482 186 A1**
(43) Date of publication of application: **25.12.2024**
(21) Application number: 24182791.4
(22) Date of filing: 18.06.2024
(51) Int. Cl.: H04W 12/30, H04W 12/40

(54) **APPARATUS, METHOD, AND COMPUTER PROGRAM**

(30) Priority: 23.06.2023 GB 202309494
(71) Applicant: Nokia Technologies Oy, 02610 Espoo (FI)
(72) Inventor: MARILLY, Emmanuel, Massy (FR); JALKH, Jérôme, Massy (FR)
(74) Representative: Nokia EPO representatives

(57) **Abstract**

The disclosure relates to an apparatus configured to receive (1400), from a subscriber identity module manager, a mobile network operator profile comprising first provisioning parameters to provision the apparatus to a mobile network operator and a module comprising second provisioning parameters to provision the apparatus to an apparatus manager; provision (1402) the apparatus to the mobile network operator using the first provisioning parameters; and provision (1404) the apparatus to the apparatus manager using the second provisioning parameters

## Description

### Field of the disclosure

The present disclosure relates to an apparatus, a method, and a computer program for provisioning the apparatus to an apparatus manager in a communication system.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

### Summary

According to an aspect there is provided an apparatus comprising at least one processor and at least one memory storing instructions that, when executed by the at least one processor, cause the apparatus at least to: receive, from a subscriber identity module manager, a mobile network operator profile comprising first provisioning parameters to provision the apparatus to a mobile network operator and a module comprising second provisioning parameters to provision the apparatus to an apparatus manager; provision the apparatus to the mobile network operator using the first provisioning parameters; and provision the apparatus to the apparatus manager using the second provisioning parameters.

The second provisioning parameters may be received from the subscriber identity module manager over the air rather than entered manually by a manufacturer of the apparatus or by a user of the apparatus. In this way, the apparatus may be seamlessly provisioned to the apparatus manager.

The module may be an applet.

The first provisioning parameters may be stored inside the mobile network operator profile. The second provisioning parameters may be stored inside the applet.

The first provisioning parameters may comprise at least one of: an integrated circuit card identifier; an international mobile subscriber identity; a personal identification number; a personal unblocking number; a network access control; a first authenticating key; or a first authenticating secret.

The second provisioning parameters may comprise at least one of: a host of the apparatus manager; a port of the apparatus manager; a second authenticating key; a second authenticating secret; a name; a type; a profile; a token; a hash; a username; or a password.

Provisioning the apparatus to the mobile network operator may comprise configuring the apparatus to be able to connect to the mobile network operator.

Provisioning the apparatus to the apparatus manager may comprise configuring the apparatus to be able to connect to the apparatus manager.

The at least one memory may store instructions that, when executed by the at least one processor, cause the apparatus at least to: store the mobile network operator profile and the module in a security domain of an embedded universal integrated circuit card.

The at least one memory may store instructions that, when executed by the at least one processor, cause the apparatus at least to: store the module inside the mobile network operator profile.

That is, the mobile network operator profile and the module may be stored in a same secure element.

The at least one memory may store instructions that, when executed by the at least one processor, cause the apparatus at least to: store the module outside the mobile network operator profile.

That is, the mobile network operator profile and the module may be stored in separate secure elements. The module may be stored in a dedicated secure element rather than within the mobile network operator profile.

Provisioning the apparatus to the apparatus manager using the second provisioning parameters may comprise: sending, from the module to an apparatus manager application running on the apparatus, the second provisioning parameters; and send, from the apparatus manager application to the apparatus manager, a request to provision the apparatus to the apparatus manager using the second provisioning parameters.

The at least one memory may store instructions that, when executed by the at least one processor, cause the apparatus at least to: receive, by the module from the apparatus via the subscriber identity module manager, an access key to be used by the apparatus manager application for sending data from the apparatus manager application to the apparatus manager; and store, by the module, the access key.

The at least one memory may store instructions that, when executed by the at least one processor, cause the apparatus at least to: receive, by the module from the apparatus manager application, a request to receive the access key to send data to the apparatus manager; send, from the module to the apparatus manager application, the access key; and send, from the apparatus manager application to the apparatus manager, data using the access key.

The data may comprise telemetry data.

The telemetry data may comprise data collected by sensors of the apparatus.

The telemetry data may comprise a temperature, a pression, a speed, a battery level or a computing power unit load, a key performance indicator or any measurement done by the apparatus.

The at least one memory may store instructions that, when executed by the at least one processor, cause the apparatus at least to: receive, by the module from the application manager via the subscriber identity module manager, configuration parameters; and store, by the module, the configuration parameters.

The configuration parameters may be initial configuration parameters (e.g. default configuration parameters).

The configuration parameters may comprise at least one of: a state; a location; an availability; a charging; a model; a serial number; firmware information; or software information.

The apparatus may comprise multiple hardware components, each hardware component running a respective firmware or hardware; and the firmware information or the software information may comprise multiple items.

The apparatus may comprise a single hardware component running a firmware or hardware; and the firmware information or the software information comprises a single instance.

The at least one memory may store instructions that, when executed by the at least one processor, cause the apparatus at least to: receive, by the module, from the subscribe identity module manager, an updated configuration parameter or an updated access key; and store, by the module, the updated configuration parameter or the updated access key.

The at least one memory may store instructions that, when executed by the at least one processor, cause the apparatus at least to: receive, by the module, from the subscribe identity module manager, updated firmware information or updated software information; and store, by the module, the updated firmware information or the update software information.

The at least one memory may store instructions that, when executed by the at least one processor, cause the apparatus at least to: send, by the module from the apparatus manager application, a notification indicating that the updated firmware information or the update software information is available.

The at least one memory may store instructions that, when executed by the at least one processor, cause the apparatus at least to: receive, by the module from the apparatus manager application, a request to receive the updated firmware information or the update software information; and send, by the module to the apparatus manager application the updated firmware information or the update software information.

In response, the apparatus manager application may receive an updated firmware or an update software identified by the updated firmware information or the update software information and install the updated firmware or the updated software on the component.

The first provisioning parameters, the second provisioning parameters and/or the configuration parameters may be stored as key-value pair attributes.

The apparatus may be an internet of things device.

The apparatus may be an industrial internet of things device.

The apparatus may be a drone or a robot.

The apparatus may be an autonomous car.

The apparatus may be a medical device.

According to an aspect there is provided an apparatus comprising means for: receiving, from a subscriber identity module manager, a mobile network operator profile comprising first provisioning parameters to provision the apparatus to a mobile network operator and a module comprising second provisioning parameters to provision the apparatus to an apparatus manager; provisioning the apparatus to the mobile network operator using the first provisioning parameters; and provisioning the apparatus to the apparatus manager using the second provisioning parameters.

According to an aspect there is provided an apparatus comprising circuitry configured to: receive, from a subscriber identity module manager, a mobile network operator profile comprising first provisioning parameters to provision the apparatus to a mobile network operator and a module comprising second provisioning parameters to provision the apparatus to an apparatus manager; provision the apparatus to the mobile network operator using the first provisioning parameters; and provision the apparatus to the apparatus manager using the second provisioning parameters.

According to an aspect there is provided a method comprising: receiving, from a subscriber identity module manager, a mobile network operator profile comprising first provisioning parameters to provision the apparatus to a mobile network operator and a module comprising second provisioning parameters to provision the apparatus to an apparatus manager; provisioning the apparatus to the mobile network operator using the first provisioning parameters; and provisioning the apparatus to the apparatus manager using the second provisioning parameters.

According to an aspect there is provided a computer program comprising computer executable code which when run on at least one processor is configured to: receive, from a subscriber identity module manager, a mobile network operator profile comprising first provisioning parameters to provision the apparatus to a mobile network operator and a module comprising second provisioning parameters to provision the apparatus to an apparatus manager; provision the apparatus to the mobile network operator using the first provisioning parameters; and provision the apparatus to the apparatus manager using the second provisioning parameters.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### List of abbreviations

- AF:: Application Function
- AGV:: Automatic Guided Vehicles
- AMF:: Access and Mobility Management Function
- AMR:: Autonomous Mobile Robot
- APDU:: Application Protocol Data Unit
- API:: Application Programming Interface
- ASP:: Application Service Provider
- BS:: Base Station
- CC:: Companion Computer
- CU:: Centralized Unit
- DaaS:: Device as a Service
- DL:: Downlink
- DM:: Device Manager
- DU:: Distributed Unit
- DTLS:: Datagram Transport Layer Security
- eSIM:: embedded Subscriber Identity Module
- eUICC:: embedded Universal Integrated Circuit Card
- FCU:: Flight Control Unit
- gNB:: gNodeB
- GSM:: Global System for Mobile communication
- GSMA:: Global System for Mobile communication Association
- HSS:: Home Subscriber Server
- ICCID:: Integrated Circuit Card Identifier
- IMSI:: Internation Mobile Subscriber Identity
- IoT:: Internet of Things
- IP:: Internet Protocol
- iSIM:: integrated Subscriber Identity Module
- LTE:: Long Term Evolution
- M2M:: Machine to Machine
- MAC:: Medium Access Control
- MNO :: Mobile Network Operator
- MS:: Mobile Station
- MTC:: Machine Type Communication
- NEF:: Network Exposure Function
- NF:: Network Function
- NR:: New radio
- NRF:: Network Repository Function
- PBRD:: Power Board
- PDU:: Packet Data Unit
- PIN:: Personal Identification Number
- PKG:: Package
- PLMN:: Public Land Mobile Network
- PUK:: Personal Unblocking numbered
- PVC:: Polyvinyl Chloride
- RAM:: Random Access Memory
- (R)AN:: (Radio) Access Network
- REST:: Representational State Transfer
- RTOS:: Real Time Operating System
- ROM:: Read Only Memory
- ROS:: Robot Operating System
- SAFE:: SIM applet for secure end-2-end
- SD:: Security Domain
- SDMA:: Secure Device Management Applet
- SIM :: Subscriber Identity Module
- SMF:: Session Management Function
- SSH:: Secure Shell
- TLS:: Transport Layer Security
- TR:: Technical Report
- TS:: Technical Specification
- UE:: User Equipment
- UMTS:: Universal Mobile Telecommunication System
- 3GPP:: 3^{rd} Generation Partnership Project
- 5G:: 5^{th} Generation
- 5GC:: 5G Core network
- 5GS:: 5G System

### Brief Description of the Figures

Embodiments will now be described, by way of example only, with reference to the accompanying Figures in which:
Figure 1 shows a schematic representation of a 5G system;
Figure 2 shows a schematic representation of a control apparatus;
Figure 3 shows a schematic representation of an Internet of things device;
Figure 4 shows a schematic representation of a high level drone computing architecture;
Figures 5a, 5b and 5c shows a flow chart of a process for performing life cycle management of an Internet of things device;
Figure 6 shows a schematic representation of an industrial Internet of things device comprising an applet paired with a device manager application;
Figure 7 shows a schematic representation of a basic deployment of an industrial Internet of things device comprising an applet paired with a device manager application;
Figure 8 shows a schematic representation of a secured applications for mobile deployment of an industrial Internet of things device comprising an applet paired with a device manager application;
Figure 9 shows a signalling diagram of a process for provisioning an industrial Internet of things device to a device manager;
Figure 10 shows a signalling diagram of a process for updating provisioning parameters to provision an industrial Internet of things device to a device manager or updating configuration parameters of an industrial Internet of things device;
Figure 11 shows a signalling diagram of a process for updating a firmware or a software running an industrial Internet of things device;
Figure 12 shows another signalling diagram of a process for updating a firmware or a software running an industrial Internet of things device;
Figures 13a and 13b shows another signalling diagram of a process for updating a firmware or a software running an industrial Internet of things device;
Figure 14 shows a block diagram of a method for provisioning an apparatus to an apparatus manager; and
Figure 15 shows a schematic representation of a non-volatile memory medium storing instructions which when executed by a processor allow a processor to perform one or more of the steps of the methods of Figure 14.

### Detailed Description of the Figures

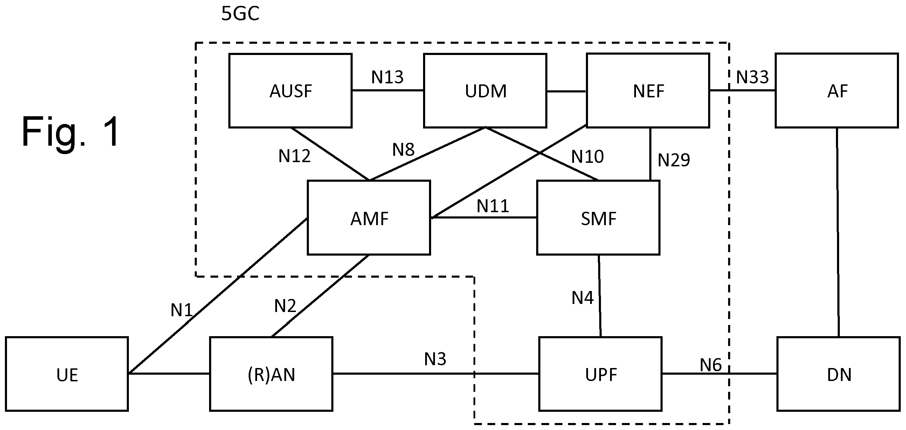

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises an Internet of things (IoT) device, a (radio) access network ((R)AN), a 5G core network (5GC), one or more application functions (AF) and one or more data networks (DN).

The IoT device may be an industrial IoT (IIoT) device, such as a drone or a robot. The IoT device may be a medical device, an autonomous car or another type of IoT device.

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF) and/or a network exposure function (NEF).

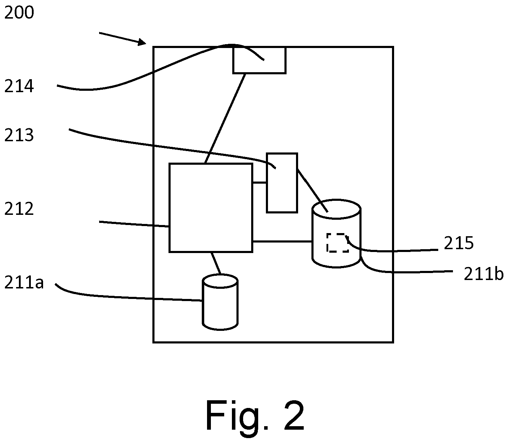

Figure 2 illustrates an example of a control apparatus 200 for controlling a function of the (R)AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

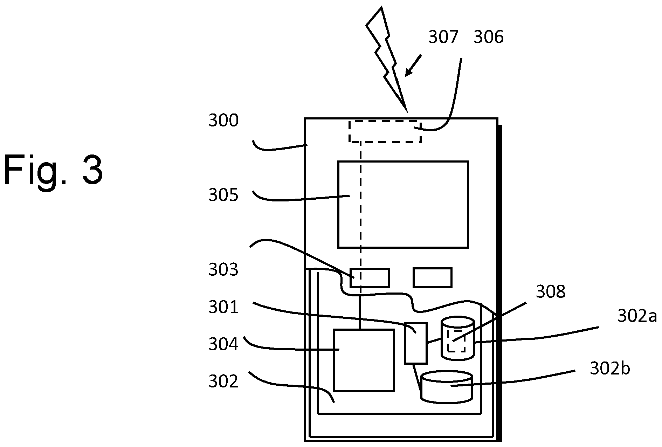

Figure 3 illustrates an example of an IoT device 300, such as the IoT device illustrated on Figure 1. The IoT device 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a cellular Internet of things (IoT) device or any combinations of these or the like. The IoT device 300 may provide, for example, communication of data for carrying communications. The communications may be one or more of voice, electronic mail (email), text message, multimedia, data, machine data and so on.

The IoT device 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The IoT device 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspects of this disclosure relate to IoT. Although the following examples focus on IIoT devices it will be understood that similar concept may be applied to IoT devices, such as medical IoT devices or automotive IoT devices.

IIoT has introduced new types of devices and services into the IoT ecosystem. Drones, automatic guided vehicles (AGVs) and autonomous mobile robots (AMRs) are used to create new business use cases and replace recurrent human activities in an automatic and flawless way. The concept of IIoT devices as a service (DaaS) is also gaining popularity with the emergence of IIoT devices. Hardware manufacturers may provide IIoT devices to multiple users while keeping control of the life cycle management of these IIoT devices.

IIoT devices have introduced new challenges. Their architecture is more complex, making their management difficult using current IoT device management solutions. The IIoT devices may need to be secured and controlled to minimize any misbehaviour, which can have a big impact on the people and assets around them.

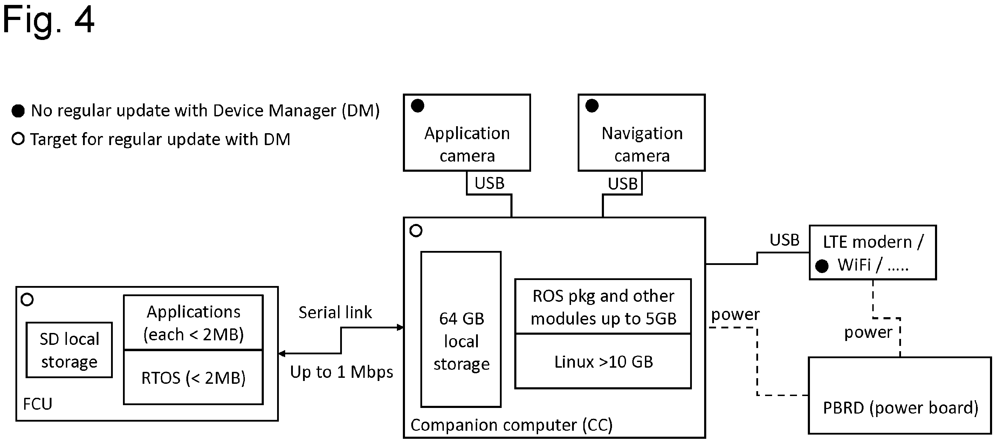

Figure 4 shows a schematic representation of a high level drone computing architecture. The AIMS drone may comprise a plurality of hardware components. The plurality of hardware components may comprise at least one of an application camera, a navigation camera, a flight control unit (FCU), a companion computer (CU), an LTE modem, a Wi-Fi modem and a power board (PBRD). The FCU may comprise at least one of a security domain (SD) local storage, applications and a real time operating system (RTOS). The CU may comprise at least one of a local storage, a robot operating system (ROS) package (PKG), module and Linux. Each hardware component may run a respective firmware or a software.

The lifecycle management of an IIoT device may comprise securely and seamlessly provisioning the IIoT device to a device manager (DM). The IIoT device may be configured to be able to connect to the device manage. The provisioning may be done securely to authenticate the IIoT device and limit attacks. The provisioning may be done seamlessly to limit input from a manufacturer or a user.

The lifecycle management of an IIoT device may comprise updating (i.e. upgrading) the firmware or software running on the hardware components of the IIoT device. The updating may be done over the air. This allows functionalities and security updates on the IIoT device remotely without physical access to the IIoT device.

The lifecycle management of an IIoT device may comprise configuring and reconfiguring the IIoT device. For example, initial configuration parameters may be provided to the IIoT device and subsequently changed to fit the specific use of the IIoT device by the user.

The lifecycle management of an IIoT device may comprise securely sending telemetry data collected by sensors of the IIoT device to the DM.

The lifecycle management of an IIoT device may comprise managing the IIoT device as a single unit comprising multiple hardware components as opposed to managing the IIoT device as multiple units comprising a single hardware component.

Global system for mobile communications association specifications relate to embedded subscriber identity module (eSIM), integrated subscriber identity module (iSIM) and remote provisioning to a mobile network operator (MNO).

An eSIM may be embedded directly into an IoT device (as opposed to embedded on a polyvinyl chloride (PVC) card). The eSIM may comprise a software stored on an embedded universal integrated circuit card (eUICC) chip attached to the IoT device.

An iSIM (integrated SIMs) may meet the same security requirements than an eSIM but may be fully integrated into a modem system on chip.

An eSIM and an iSIM may be managed remotely through mechanism described in GSMA specifications. GSMA specifications comprise consumer specifications, machine to machine (M2M) specifications and IoT specifications.

GSMA specifications define a mechanism to remotely provision an IIoT device to an initial MNO and subsequently switch from the initial MNO to another MNO.

An IIoT device may receive a MNO profile from an eSIM or iSIM manger. The MNO profile may comprise a file structure, data, and applications. The MNO profile may comprise provisioning parameters to remotely provision the IIoT device to the MNO. The provisioning parameters may comprise at least one of connectivity parameters, subscription parameters or MNO credentials. The provisioning parameters may comprise at least one of an integrated circuit card identifier (ICCID), an international mobile subscriber identity (IMSI), a personal identification number (PIN), a personal unblocking number (PUK), a network access control (NAC), an authenticating key, an authenticating secret or a public land mobile network (PLMN). The MNO profile may comprise policy rules.

GSMA specifications further comprise secured applications for mobile (SAM) specifications. SAM specifications define a mechanism allowing an IIoT device to use a wide range of secured applets stored within the eUICC. These applets may be managed by a service provider and may be paired with applications running in the IIoT device. SAM may be applied in the context of IoT but also consumer.

The eUICC may comprise a SAM security domain (SD). The SAM SD may comprise an application service provider (ASP) SD including an ASP SD where the applets are stored. The applets may be used to assure the security of the applications running in the IoT device. The applets may store keys or parameters. The applets may perform security operations (e.g. encryption or signing).

There is currently only one applet defined by the GSMA specifications that can be stored by IIoT devices, namely the SIM applet for secure end-2-end (SAFE).

The SAFE provides a mechanism to securely communicate between an IIoT device and an IIoT service platform. It can be seen as a simple microcontroller application programming interface (API) that can be used by an application running on the IIoT device to access the secure capabilities of the SIM when using transport layer security (TLS) or datagram transport layer security (DTLS) protocols to secure an internet protocol (IP) connection to the IoT service platform. Credentials associated with TLS or DTLS protocols may be stored within the SAFE and may be used by an application running on the IIoT device. Credentials may comprise at least one of a certificate or a key. The IIoT service provider may send initial credentials to the SAFE over the air. The IoT service provider may subsequently send updated credentials to the SAFE over the air.

The SAFE may allow to securely communicate between an IIoT device and an IIoT service platform. However, the SAFE may not allow to perform life cycle management of an IoT device, let alone life cycle management of an IIoT device comprising multiple hardware components.

As explained above, life cycle management of an IIoT device may comprise at least one of securely and seamlessly provisioning the IIoT device to a DM, updating (i.e. upgrading) the firmware or software running on the multiple hardware components of the IIoT device, configuring and reconfiguring the IIoT device, securely sending telemetry data collected by sensors of the IIoT device to the DM or managing the IIoT device as a single unit comprising multiple hardware components as opposed to managing the IIoT device as multiple units comprising a single hardware component.

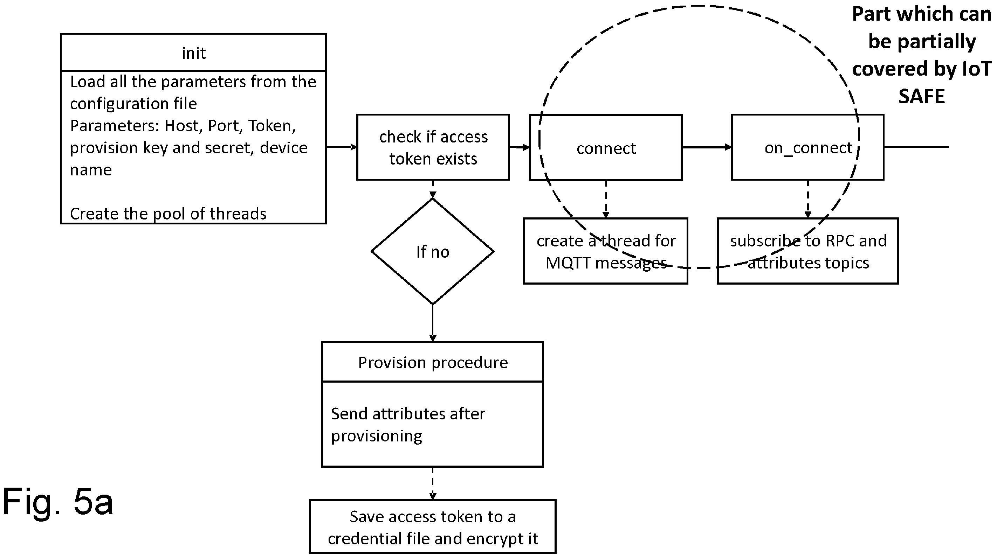

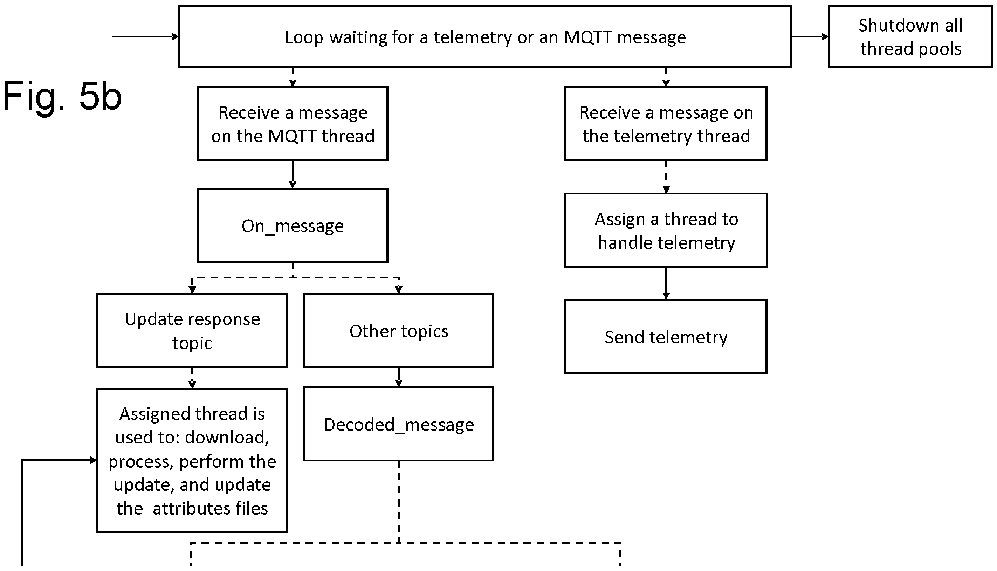

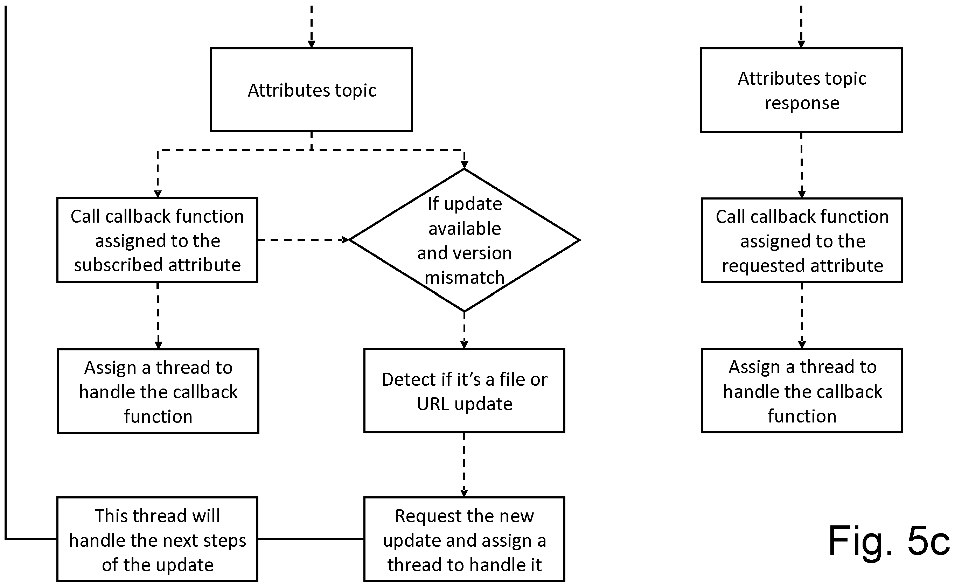

Figures 5a, 5b and 5c show a flow chart of a process for performing life cycle management of an IIoT device. The part of the process that may be partially implemented by the SAFE is circled. The other part of the process may not be partially implemented by the SAFE.

There is currently no plug and play mechanism (i.e. zero touch for the customer) to securely and seamlessly perform life cycle management of IIoT device, let alone an IIoT device comprising multiple hardware components.

Currently, a manufacturer or a user of an IIoT device may initially manually enter at least one of provisioning parameters to provision the IIoT device to a private network, provisioning parameters to provision the IIoT device to a DM and configuration parameters to fit the specific use of the IIoT device by the user. This may create a scaling problem when dealing with a large number of IIoT devices.

Moreover, the provisioning parameters to provision the IIoT device to a private network, the provisioning parameters to provision the IIoT device to a DM and the configuration parameters to fit the specific use of the IIoT device by the user may typically be saved on the IIoT device outside the eUICC. This may make the IIoT device prone to security attacks.

Subsequently, the user may switch the IIoT device from the private network to a public network or the user may change the configuration parameters to fit the specific use of the IIoT device by the user. This may currently be done through representational state transfer (REST) APIs, secure shell (SSH) connections or specific IoT protocols. These operations may require further manual input from the user of the IIoT device and therefore may create a further a scaling problem when dealing with a large number of IIoT devices and may further make the IIoT device prone to security attacks.

One or more aspect of this disclosure aims at addressing one or more of the above shortcomings.

One or more aspect of this disclosure provides a secure device management applet (SMDA) to perform life cycle management of an IIoT device. The SDMA may be distinct from the SAFE.

The SDMA may allow securely and seamlessly provisioning the IIoT device to a DM.

The SDMA may allow updating (i.e. upgrading) the firmware or software running on the multiple hardware components of the IIoT device.

The SDMA may allow configuring and reconfiguring the IIoT device.

The SDMA may allow securely sending telemetry data collected by sensors of the IIoT device to the DM.

The SDMA may allow managing the IIoT device as a single unit comprising multiple hardware components as opposed to managing the IIoT device as multiple units comprising a single hardware component.

The SMDA may be provided to the IIoT device over the air. Existing eSIM or iSIM mechanisms may be used.

The SMDA may be stored on a security domain of the eUICC of the IIoT device. The SDMA may be stored inside an MNO profile (i.e. the MNO profile and the SMDA may be stored in a same secure element). Alternatively, the SDMA may be stored outside an MNO profile (i.e. the MNO profile and the SMDA may be stored in distinct secure elements). In this way, the SDMA may be independent from the MNO profile. The SDMA may be managed by SAM.

The MNO profile may comprise a file structure, data, and applications. The MNO profile may comprise provisioning parameters to provision the IIoT device to the MNO. The provisioning parameters may comprise at least one of connectivity parameters, subscription parameters or MNO credentials. The provisioning parameters may comprise at least one of an ICCID, an IMSI, a PIN, a PUK, a NAC, an authenticating key, a PLMN. The MNO profile may comprise policy rules.

The SDMA may comprise a SD.

The SDMA may comprise configuration parameters of the IIoT device. The configuration parameters may comprise at least one of a state, a location, an availability, a charging, a model, a serial number, firmware information or software information. The configuration parameters may be stored within the SD of the SDMA. The configuration parameters may be stored in configuration files.

A state may comprise a connection state (e.g. connected to DM or not connected to DM), an installation state (e.g. queued, initiated, downloading, downloaded, verified, failed, updating or updated) or operational state (e.g. disabled or enabled) or a processing state (e.g. successful execution, unsuccessful execution, invalid instruction, invalid parameter or unknown error).

When the IIoT device comprises multiple hardware components, each hardware component running a respective firmware or hardware, the firmware information or the software information may comprise multiple items.

When the IIoT device comprises a single hardware component running a firmware or hardware and the firmware information or the software information may comprise a single item.

The SDMA may comprise provisioning parameters to provision the IIoT device to the DM. The provisioning parameters to provision the IIoT device to the DM may comprise at least one of a host of the DM, a port of the DM, an authenticating key, an authenticating secret, a name, a type, an IIoT device profile, a token, a hash, a username or a password. The host of the DM and the port of the DM may define an endpoint or uniform resource locator of the DM. The provisioning parameters may be stored with the SD of the SDMA. The provisioning parameters may be stored in provisioning files.

The configuration parameters of the IIoT device and the provisioning parameters to provision the IIoT device to the DM may be attributes defined as key-value pairs (e.g. "attributeName":"attributeValue"). The attribute name may be a string. The attribute value may be a string, a boolean, a double, an integer or a JSON. The data types of the attribute name and the attribute value on the DM may not all be supported by the SDMA (e.g. the SDMA may be based on JAVA CARD).

An generic example of a definition of an attribute is illustrated below.

```
            {
             "somestring":"NokiaDrone.2023",
             "booleanParameter":true,
             "doubleParameter":2.0,
             "someLongParameter":7,
             "someArray": [1,2,3],
             "someConfiguration": {
             "someNumber": 12,
             "someNestedObject": {"key": "value"}
             }
```

The attribute model may be flexible and simple allowing the manufacturer or the user of the IIoT device to define their own model and to facilitate updates during the life cycle of the IIoT device.

The SDMA may comprise credentials associated with TLS or DTLS protocols.

The SDMA may comprise an interface with SAFE to securely communicate between the IIoT device and the DM.

A DM application may be stored on the IIoT device. The DM application may be stored outside the eUICC. The DM may be paired with the SDMA. In this way, the DM application may use the secure capabilities of the eSIM or iSIM to communicate with the DM. The DM may ensure that the communications are secured, trusted and validated.

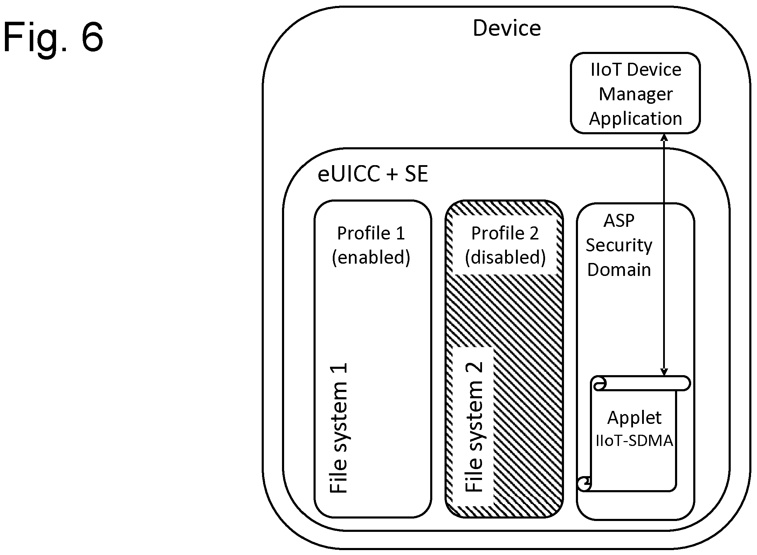

Figure 6 shows a schematic representation of an IIoT device comprising a first MNO profile, a second MNO profile, the SDMA and a DM application. The first MNO profile is enabled. The second MNO profile is disabled. The SDMA is stored outside the first MNO profile and outside the second MNO profile. The SDMA is stored in an ASP SD of the eUICC. The SDMA is paired with the DM application. The SDMA may always be visible to the DM application even if the IIoT switches from the first MNO profile and the second MNO profile.

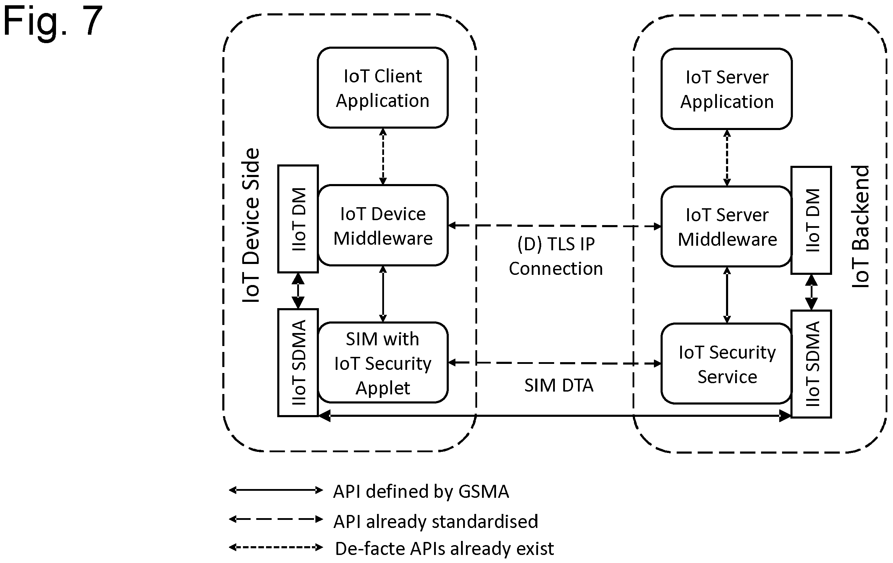

Figure 7 shows a schematic representation of a basic implementation of an IIoT device comprising the SDMA paired with the DM application.

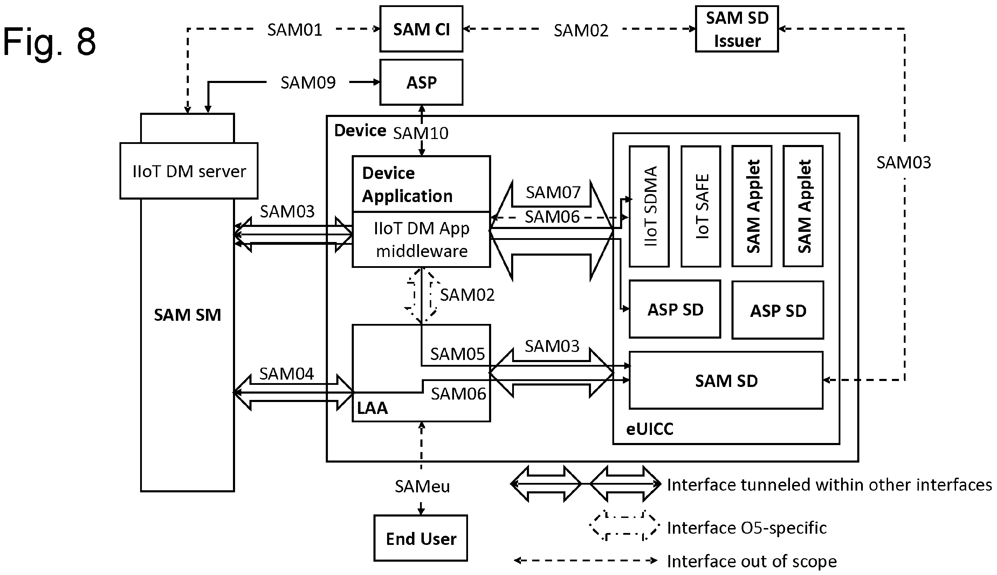

Figure 8 shows a schematic representation of a SAM implementation of an IoT device comprising the SDMA paired with the DM application. The DM may communicate with the SDMA indirectly using SAM command. The DM may communicate with the DM application directly.

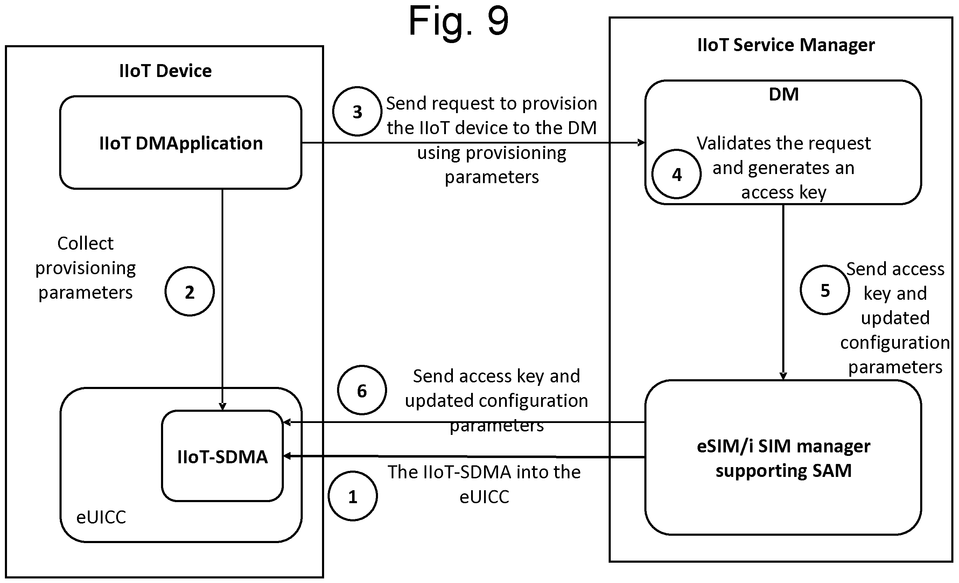

Figure 9 shows a signalling diagram of a process for provisioning an IIoT device to a DM.

Preliminary, the IIoT device may be registered (i.e. enrolled) with the MNO. The MNO may generate a MNO profile comprising the provisioning parameters to provision the IIoT device to the MNO. The MNO profile comprising the provisioning parameters to provision the IIoT device to the MNO may be stored by an eSIM or iSIM manager.

The IIoT device may be registered (i.e. enrolled) to the DM. The DM may store configuration parameters of the IIoT device. The DM may store the provisioning parameters to provision the IIoT device to the DM.

A generic example of the provisioning parameters to provision the IIoT device to the DM is illustrated below:

```
            {
             "host": "address of the device manager",
             "port": "port of the device manager",
             "deviceName": "DEVICE_NAME",
             "deviceType": "DEVICE_TYPE",
             "deviceProfile": "DEVICE_PROFILE",
             "provisionDeviceKey": "PUT_PROVISION_KEY_HERE",
             "provisionDeviceSecret":
            "PUT_PROVISION_SECRET_HERE",
             "credentialsType": "ACCESS_TOKEN" or
            "X509_CERTIFICATE" or "MQTT_BASIC" or ...,
             "token": "DEVICE_ACCESS_TOKEN"
             "hash": "MIIB........AQAB"
             "username": "DEVICE_USERNAME_HERE",
             "password": "DEVICE_PASSWORD_HERE"
            }
```

The deviceName may refer to a name of the IIoT device.

The deviceType may refer to a type of IIoT device.

The deviceProfile may refer to be a subcategory of the deviceType that has its own authenticating key and authentictaing secret.

The provision Device Key and provisionDeviceSecret may refer to an authenticating key and an authenticating secret. They may be used by the DM application to communicate to the DM for the first time.

The credentialsType may refer to a type of credentials.

The hash may refer to a public/private key X509 hash for the IIoT device.

A specific example of the provisioning parameters to provision the IIoT device to the DM is illustrated below:

```
             {
             "host": "device-manager.msv-project.com",
             "port": 30352,
             "provisionDeviceKey": "zt8dkbd60mxft0s3pdug",
             "provisionDeviceSecret": "2n7pnqgkiun4b2h6jqvv",
             "deviceName": "Drone X10",
             "deviceType": "Drone",
             "deviceProfile": "device_profile_p1",
             "token": "oDyWHngsPuMILPU0IC6J"
                 "hash": "MIIB........AQAB"
                  "username": "John Smith",
                  "password": "aUh5!mNO5"
             }
```

The DM may send to an eSIM or iSIM manager, the provisioning parameters to provision the IIoT device to the DM and the configuration parameters. The eSIM or iSIM manager may store the provisioning parameters to provision the IIoT device to the DM and the configuration parameters in a SDMA.

The IIoT device may attach to the eSIM or iSIM manager. Techniques for attaching the IIoT device to the eSIM or iSIM manager are well known and therefore only briefly discussed below.

In an example, the IIoT device may connect to a non-cellular wireless network (e.g. Wi-Fi network) or to a wired network (e.g. Ethernet network). If the IIoT device has a camera, a QR code may be mailed to the user of the IIoT device. The QR code may comprise at least one of the host of the eSIM or iSIM manager or the port of the eSIM or iSIM manager. The IIoT device may scan the QR code and may attach to the eSIM or iSIM manager. If the IIoT device does not have a camera, the host of the eSIM or iSIM manager or the port of the eSIM or iSIM manager may be mailed to the user of the IIoT device. The user may manually enter the host of the eSIM or iSIM manager or the port of the eSIM or iSIM manager and the IIoT device may attach to the eSIM or iSIM manager. The IIoT device may store a certificate from manufacturing allowing the IIoT device to attach to the eSIM or iSIM manager.

In another example, the IIoT device may not connect to a non-cellular wireless network (e.g. Wi-Fi network) or to a wired network (e.g. Ethernet network). The IIoT device may store an eSIM IoT remote manager configuration on the eUICC. The IIoT device may connect to a cellular network using a bootstrap profile. The IIoT device may attach to the eSIM or iSIM manager.

In step 1, the IIoT device may send, to the eSIM or iSIM manager, a request to receive a MNO profile comprising the provisioning parameters to provision the IIoT device to the MNO and the SDMA comprising provisioning parameters to provision the IIoT device to the DM and the configuration parameters of the IIoT device.

The IIoT device may store the MNO profile comprising the provisioning parameters to provision the IIoT device to the MNO and the SDMA comprising the provisioning parameters to provision the IIoT device to the DM and the configuration parameters of the IIoT device on the eUICC.

In step 2, the SDMA may notify the DM application that the provisioning parameters to provision the IIoT device to the DM manager and the configuration parameters of the IIoT device are available.

The SDMA may receive, from the DM application, a request to receive the provisioning parameters to provision the IIoT device to the DM manager. The SDMA may send, to the DM application, the provisioning parameters to provision the IIoT device to the DM manager.

In step 3, the DM application may send, to the DM, a request to provision the IIoT device to the DM using the provisioning parameters to provision the IIoT device.

In step 4, the DM accepts the request and generates an access key to subsequently send data from the DM application and the DM. The access key may be unique to the IIoT device. Data may comprise telemetry data. Telemetry data may comprise data collected by sensors of the IIoT device. Telemetry data may comprise a temperature, a pression, a speed, a battery level or a computing power unit load, a key performance indicator or any measurement done by the IIoT. The DM may generate updated configuration parameters of the IIoT device.

In step 5, the eSIM or iSIM manager may receive, from the DM, the access key of the IIoT device and the updated configuration parameters of the IIoT device.

In step 6, the SDMA may receive, from the eSIM or the SIM manager, the access key and the updated configuration parameters of the IIoT device. The SDMA may store the access key and the updated configuration parameters. The SDMA may notify the DM application that the access key and the updated configuration parameters are available.

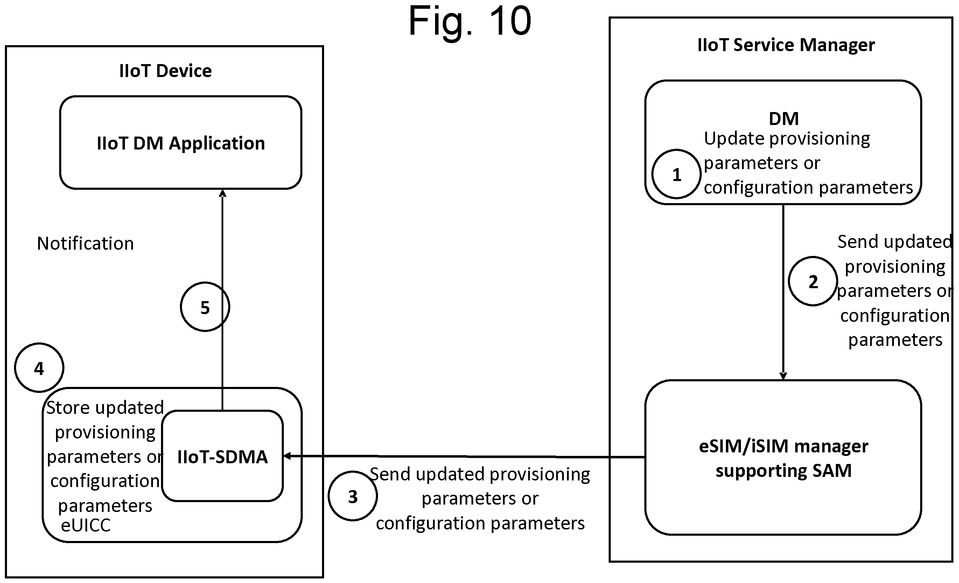

Figure 10 shows a signalling diagram of a process for updating the provisioning parameters to provision the IoT to the DM or updating the configuration parameters of the IIoT device.

In this disclosure the terms updating and upgrading may be used interchangeably.

In step 1, the provisioning parameters to provision the IIoT device to the DM or the configuration parameters of the IIoT device stored on the DM may be updated. For example, the manufacturer of the IIoT device, the user of the IIoT device or an operator of the DM may update the provisioning parameters to provision the IIoT device to the DM or the configuration parameters of the IIoT device stored on the DM.

A specific example of updated configuration parameters of the IIoT device is illustrated below.

```
            {
             "deviceAttributes": {
               "State": "Disabled",
               "Location": "L1",
               "Available_for_a_mission" : "No",
               "Charging": "Yes",
               "Type": "Test",
               "Model": "Test",
               "Serial_Number": "123"
             },
             "firmware": [{"xx":"yy"}, [{"aa":"zz"}],
             "software": [{"xx":"yy"}, [{"aa":"zz"}]
            }
```

The type may be a sub-type of the deviceType.

In step 2, the DM may send, to the eSIM or the iSIM manager, updated provisioning parameters to provision the IoT to the DM or updated configuration parameters of the IIoT device.

In step 3, the SDMA may receive, from the eSIM or the iSIM manager, the updated provisioning parameters to provision the IoT to the DM or the updated configuration parameters of the IIoT device.

In step 4, the SDMA may store the updated provisioning parameters to provision the IoT to the DM or the updated configuration parameters of the IIoT device.

In step 5, the SDMA may notify the DM application that the updated provisioning parameters to provision the IoT to the DM or the updated configuration parameters of the IIoT device are available. The DM application may send, to the SDMA, a request to receive the updated provisioning parameters to provision the IoT to the DM or the updated configuration parameters of the IIoT device. The SDMA may send, to the DM application, the updated provisioning parameters to provision the IoT to the DM or the updated configuration parameters of the IIoT device.

A firmware or a software may be assigned to an I IoT device profile or an I IoT device. An IIoT device may be updated on at least one of an IIoT device profile level or an IIoT device level.

In an example, a drone A and a drone B have a configuration parameter "deviceProfile": "device_profile_p1".

Drone A may be updated on an I IoT device profile level and an I IoT device level. Drone B may be updated on an IIoT device profile level but not on an IIoT device level. If "firmware_1" is assigned to "device_profile_p1", both drone A and drone B may be updated with "firmware_1". If "firmware_2" is assigned to drone A, the drone A may be updated with "firmware_2". The drone B may remain with "firmware_1".

Alternatively, drone A may be updated on an IIoT device level. Drone B may be updated on an IIoT device profile level. If "firmware_3" is assigned to "device_profile_p1", only drone B may be updated with "firmware_3". Drone A may remain with "firmware_1".

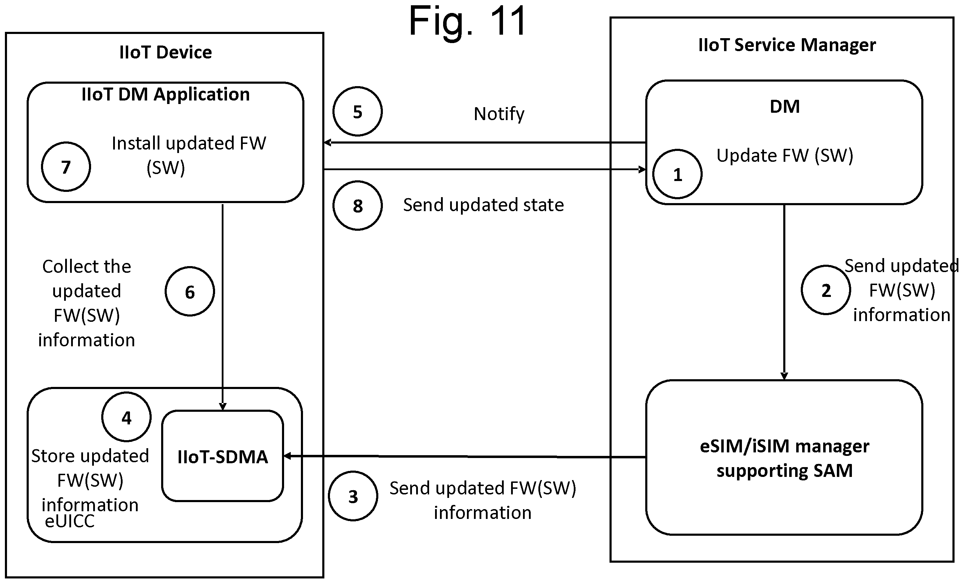

Figure 11 shows a signalling diagram of a process for updating a firmware or a software running an IIoT device.

In step 1, a firmware (software) stored on the DM may be updated. For example, the manufacturer of the IIoT device, the user of the IIoT device or the operator of the DM may update the firmware or the software.

The DM may update the configuration parameters of the IIoT device. More specifically, the DM may update the firmware (software) information.

A generic example of updated firmware (software) information of the IIoT device is illustrated below.

```
            {
             "fw(sf)Name":"firmware\_1",
             "fw(sf)Version":"1.0.1",
             "fw(sf)Size ": "2Mo",
             "fw(sf)Checksum":"",
             "fw(sf)ChecksumAlgorithm": "",
             "fw (sf) Details": [{"xx":"yy"}, {"aa":"zz"}]
            }
            
```

fw(sf)Version may refer to the version of the firmware (software)
fw(sf)Size may refer to the size of the firmware (software).
fw(sf)Checksum may refer to updated firmware (software) checksum. It may be used
to verify integrity of the received file.
fw(sf)ChecksumAlgorithm may refer to the algorithm used for the updated firmware (software) checksum (e.g. SHA-256 by default).
fw(sf) Details may refer to properties of the updated firmware (software) (e.g. repo, url, pwd, a state (e.g. installation state), etc.)

In step 2, the DM may send, to the eSIM or iSIM manager, the updated firmware (software) information.

In step 3, the SDMA may receive, from the eSIM or iSIM manager, the updated firmware (software) information of the IIoT device.

In step 4, the SDMA may store the updated firmware (software) information. The SDMA may overwrite outdated firmware (software) information.

In step 5, the DM may notify the DM application that the updated firmware (software) information is available. The DM may trigger the DM application to collect the updated firmware (software) information from the SDMA.

In step 6, the DM application may send a request, to the SDMA, to receive the updated firmware (software) information. The SDMA may send, to the DM application, the updated firmware (software) information.

In step 7, the DM application may send, to the DM, a request to receive the updated firmware (software) using the firmware (software) information. The DM application may receive, from the DM, the updated firmware (software). The DM application may install the updated firmware (software).

In step 8, the DM application may send, to the DM, a state set to updated.

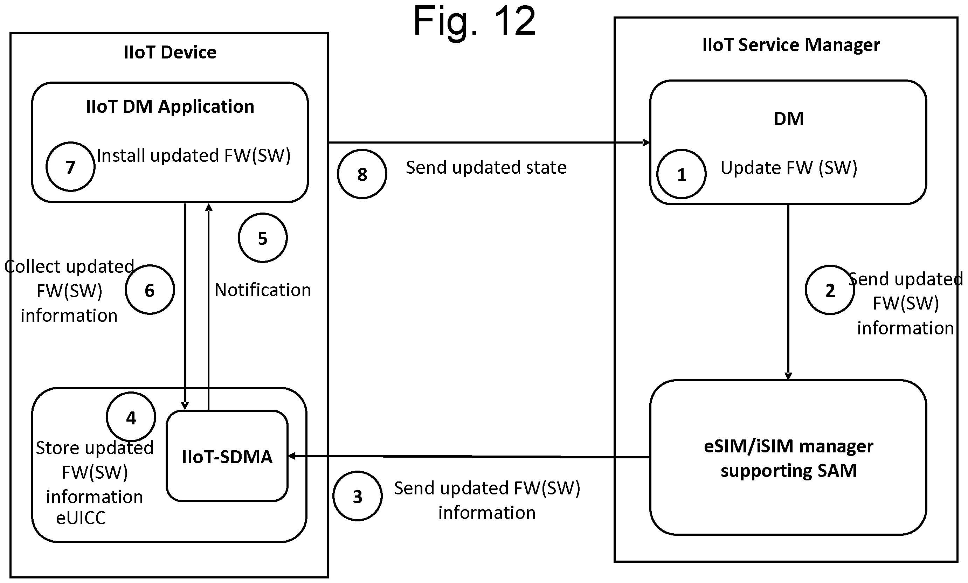

Figure 12 shows another signalling diagram of a process for updating a firmware or a software running an industrial Internet of things device.

In step 1, a firmware (software) stored on the DM may be updated. For example, the manufacturer of the IIoT device, the user of the IIoT device or the operator of the DM may update the firmware or the software. The DM may update the configuration parameters of the IIoT device. More specifically, the DM may update the firmware (software) information.

In step 2, the DM may send, to the eSIM or iSIM manager, the updated firmware (software) information.

In step 3, the SDMA may receive, from the eSIM or iSIM manager, the updated firmware (software) information of the IIoT device.

In step 4, the SDMA may store the updated firmware (software) information. The SDMA may overwrite outdated firmware (software) information.

In step 5, the SDMA may notify the DM application that the updated firmware (software) information is available. The SDMA may trigger the DM application to collect the updated firmware (software) information from the SDMA.

In step 6, the DM application may send a request, to the SDMA, to receive the updated firmware (software) information. The SDMA may send, to the DM application, the updated firmware (software) information.

In step 7, the DM application may send, to the DM, a request to receive the updated firmware (software) using the firmware (software) information. The DM application may receive, from the DM, the updated firmware (software). The DM application may install the updated firmware (software).

In step 8, the DM application may send, to the DM, a state set to updated.

The process of Figure 12 may be advantageous over the process of Figure 11 in that the notification to the DM application that the updated firmware (software) information is available is sent securely by the SDMA rather than over the air by the DM.

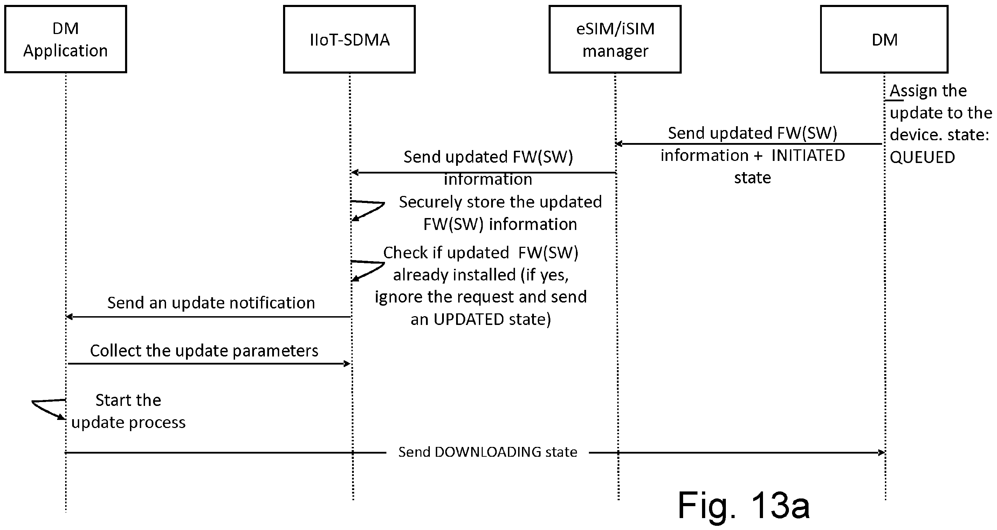

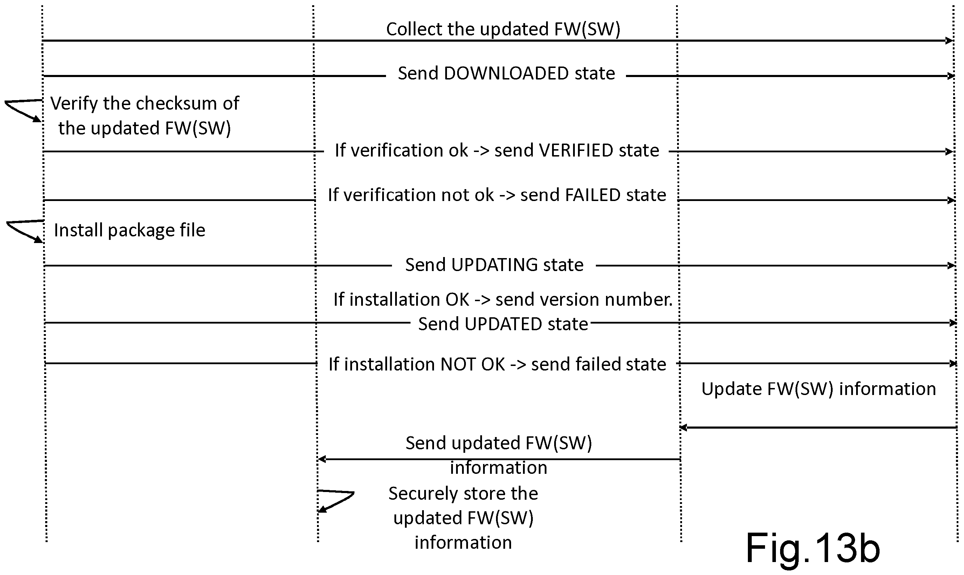

Figures 13a and 13b show another signalling diagram of a process for updating a firmware or a software running an IIoT device.

A firmware (software) stored on the DM may be updated. For example, the manufacturer of the IIoT device, the user of the IIoT device or the operator of the DM may update the firmware or the software. The DM may assign the updated firmware (software) to the IIoT device. The DM may update the configuration parameters of the IIoT device. More specifically, the DM may update the firmware (software) information.

The DM may send, to the eSIM or iSIM manager, the updated firmware (software) information. The DM may set a state to initiated.

The SDMA may receive, from the eSIM or iSIM manager, the updated firmware (software) information of the IIoT device.

The SDMA may store the updated firmware (software) information. The SDMA may overwrite outdated firmware (software) information.

The SDAM may check if the updated firmware (software) has already been installed on the IIoT device.

If the updated firmware (software) has already been installed on the IIoT device, the SDMA may send, to the eSIM or iSIM manager a state set to updated.

If the updated firmware (software) has not already been installed on the IIoT device, the SDMA may notify the DM application that the updated firmware (software) information is available. The SDMA may trigger the DM application to collect the updated firmware (software) information from the SDMA.

The DM application may send a request, to the SDMA, to receive the updated firmware (software) information. The SDMA may send, to the DM application, the updated firmware (software) information.

The DM application may send, to the DM, a request to start downloading the updated firmware (software) using the firmware (software) information. The DM application may send, to the DM, a state set to downloading.

The DM application may download, from the DM, the updated firmware (software).

The DM application may send, to the DM, a state set to downloaded.

The DM application may check the checksum of the updated firmware (software). If the checksum is correct, the DM application may send, to the DM, a state set to verified. If the checksum is not correct, the DM application may send, to the DM, a state set to failed.

The DM application may start installing the updated firmware (software). The DM application may send, to the DM, a state set to updating.

If the installation is successful, the DM application may send, to the DM, a state set to updated.

If the installation is not successful, the DM application may send, to the DM, a state set to failed.

The DM may update the firmware (software) information of the IIoT device. The DM may send the updated firmware (software) information of the IIoT device to the SDMA.

The SDMA may store the updated the firmware (software) information of the IIoT device.

The SDMA may support logical groups of hardware components definition based on explicit tags or hardware component characteristics (e.g. type, hardware version, firmware version, state, etc.).

A generic example of an IIoT device profile that the SDMA may support is illustrated below.

```
            {
             "name": "Drones",
             "transportType": "DEFAULT",
             "provisionType": "DEFAULT",
             "profile": {
             "configuration": {
               "type": "DEFAULT"
             },
             "transportConfiguration": {
               "type": "DEFAULT"
             },
             "provisionConfiguration": {
               "type": "DEFAULT"
             },
             },
             "firmware": [{"xx":"yy"}, ("aa":"zz"}],
             "software": [{"xx":"yy"}, {"aa":"zz"}],
             "state": "enabled"
            }
```

As explained above an IIoT device may comprise multiple hardware components. For instance, a drone has a CC and an FCU. Therefore, the firmware and software information may comprise several items for the multiple hardware component. The SDMA may store the firmware and software information as a file. The SDMA may provide function to store or fetch each item of the firmware and software information.

As all data formats may not be supported by the SDMA, the SMDA may store data (i.e. the configuration parameters of the IIoT device and the provisioning parameters to provision the IIoT device to the DM) in a supported format and the DM application may convert it to a required format when needed. The application protocol data unit (APDU) may be the supported format. The format of the APDU is defined in ISO specification 7816-4.

The SDMA may provide commands to store or fetch data or metadata from the SDMA. For instance, a command may allow to retrieve part of the configuration parameters of the IIoT device (e.g. access key) or retrieve all of the configuration parameters of the IIoT device.

The SDMA may comprise various APIs, such as a "get_data" API, "get_updated_data" API, "set_updated_state" or "verify_checksum".

Configuration parameters of the IIoT device and provisioning parameters to provision the IIoT device to the DM may be stored in respective files. Configuration parameters of the IIoT device and provisioning parameters to provision the IIoT device to the DM may be stored in a same file as a list of objects (e.g. Configuration parameters, provisioning parameters), each object comprising key-value pair attributes. The "collect_data" API may provide different commands such as get object list, get attribute, get secret key, get file, etc.

The get object list command may list all objects and their key-value pair attributes stored in the applet. Objects may be listed one after the other. They may be grouped together in a response message. The response message may comprise complete object information structures. A response message may only contains the complete object information structures. The object information structure may be for instance the key-value pair attribute information structure as defined in the table. It may be complete.

The following table may define a header of the get object list command.

| **Code** | **Length (Bytes)** | **Description** | **Possible value** |
|---|---|---|---|
| CLA | 1 | Class | 0xC0 |
| INS | 1 | Get Provisioning Data command | 0xCB |
| P1 | 1 | Reference control parameter P1 | 0x01 = get data - object list |
| P2 | 1 | Reference control parameter P2 | Data outgoing mode |
| | | | • 0x00 = first outgoing data |
| | | | • 0x01 = more outgoing data |
| Le | 1 | Length of the response message | 0x00 |

The following table may define a data field in a response message.

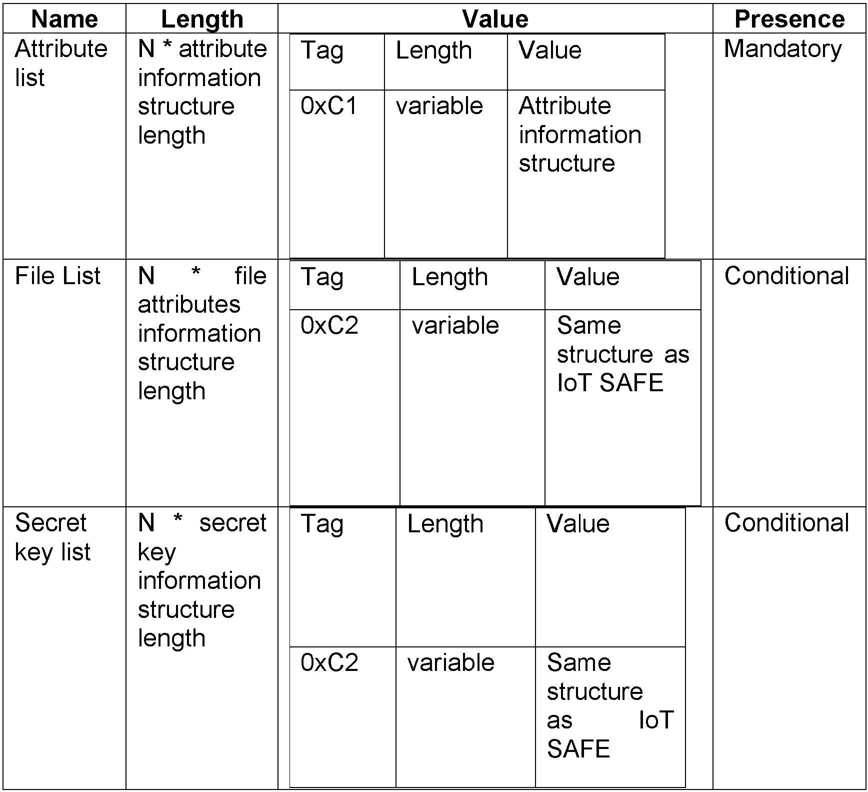

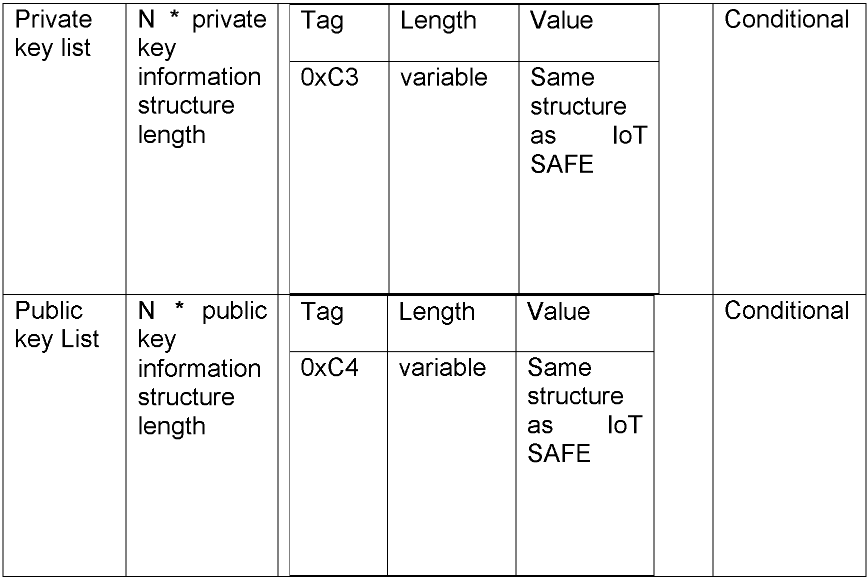

The following table may define a key-value pair attribute information structure.

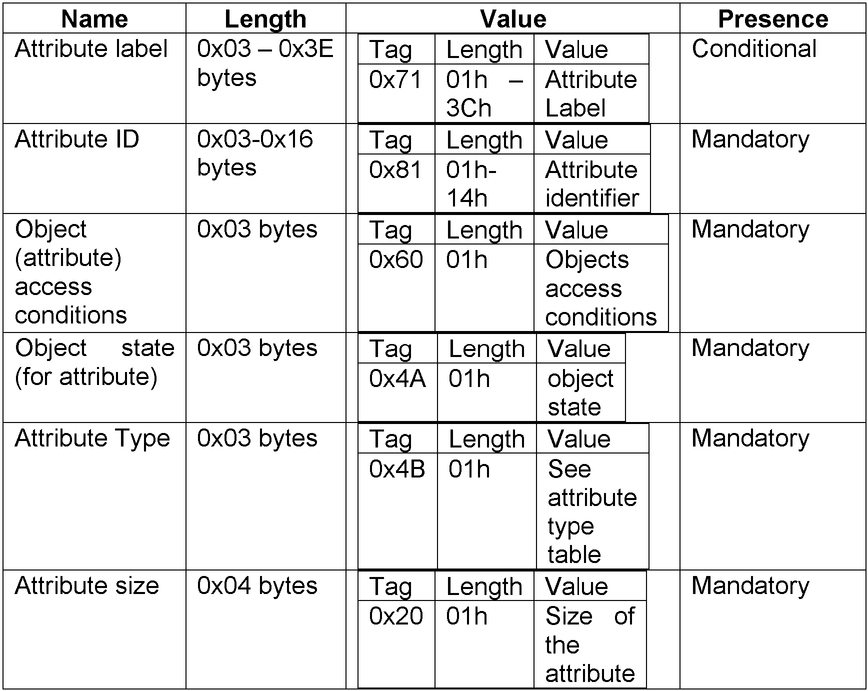

The following table may define an attribute type.

| **Attribute Type Value** | **Description** |
|---|---|
| 1 byte | |
| 0x02 | "host": address of the device manager |
| 0x12 | "port": port of the device manager |
| 0x22 | "deviceName": name of the device |
| 0x32 | "deviceType": type of the device |
| 0x42 | "deviceProfile": profile of the device |
| 0x52 | "provisionDeviceKey": provision key of the device |
| 0x62 | "provisionDeviceSecret": secret key for the device provisioning |
| 0xA2 | "credentialsType": credential type use by the device. It could be access token, X509, MQTT basic, etc... |
| 0xB2 | "token": Access token for the device. |
| 0xC2 | "hash": hash value |
| 0xD2 | "username": username for device connection |
| 0xE2 | "password": password for device connection |

The following table may define a processing state returned in a response message

| State Word | Description |
|---|---|
| 0x9000 | Successful execution |
| 0x6A86 | Incorrect P1, P2 |
| 0x6300 | More data available |
| 6400 | integrity Issue (applet store integrity issue detected) |
| 6D00 | Invalid instruction |
| 6F00 | Unknown error (other error) |

The following table may define a header get attribute command.

| **Code** | **Length (Bytes)** | **Description** | **Possible value** |
|---|---|---|---|
| CLA | 1 | Class | 0xC0 |
| INS | 1 | Get Provisioning Data command | 0xCB |
| P1 | 1 | Reference control parameter P1 | 0xC5 = get data - attribute |
| P2 | 1 | Reference control parameter P2 | 0x00 |
| Lc | 1 | Length of the input data field | See data field in the command message |
| Le | 1 | Length of the response message | 0x00 |

The following table may define a data field in the get attribute command.

| **Code** | **Length (Bytes)** | **Value** | **Presence** |
|---|---|---|---|
| 0x71 | 0x01-0x3C | Attribute Label | Conditional |
| 0x81 | 0x01-0x14 | Attribute ID | Conditional |

One or more aspect of this disclosure provide a capability to remotely and securely manage any IIoT device. For example, the provisioning parameters to provision the IIoT device to the DM may be provided to the IIoT via the SDMA with no need to store these provisioning parameters during manufacturing. It may be done automatically when the IIoT device attaches to the eSIM or iSIM manager and the MNO profile is downloaded.

One or more aspect of this disclosure provide a capability to rely on all the features presented by the eSIM or iSIM technology. One of these features is the ability to store all sensitive data in a secure element while being able to manage them remotely. One or more aspect of this disclosure provide a capability to perform life cycle management of the IIoT device with minimum user or manufacturer input (i.e. zero touch).

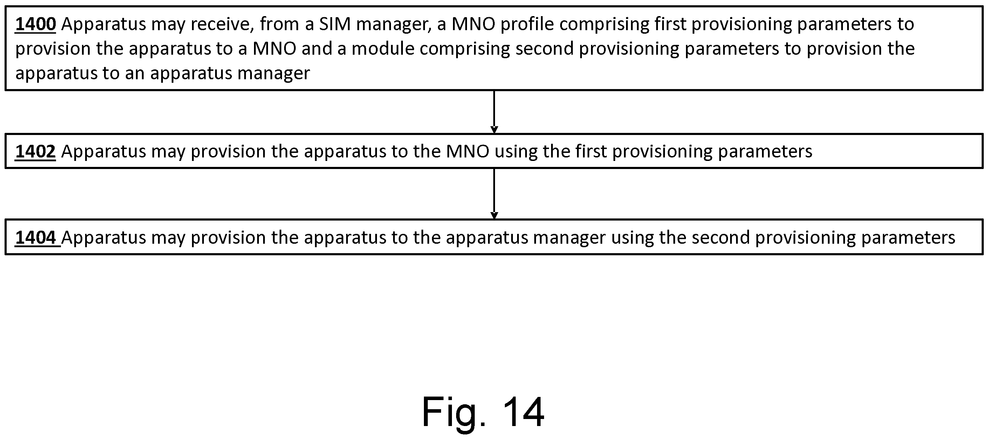

Figure 14 shows a block diagram of a method for provisioning an apparatus to an apparatus manager.

In step 1400, an apparatus may receive, from a SIM manager, a MNO profile comprising first provisioning parameters to provision the apparatus to a MNO and a module comprising second provisioning parameters to provision the apparatus to an apparatus manager.

In step 1402, the apparatus may provision the apparatus to the MNO using the first provisioning parameters.

In step 1404, the apparatus may provision the apparatus to the apparatus manager using the second provisioning parameters.

The second provisioning parameters may be received from the SIM manager over the air rather than entered manually by a manufacturer of the apparatus or by a user of the apparatus. In this way, the apparatus may be seamlessly provisioned to the apparatus manager.

The module may be an applet.

The first provisioning parameters may be stored inside the MNOI profile. The second provisioning parameters may be stored inside the applet.

The first provisioning parameters may comprise at least one of: an ICCID, an IMSI, a PIN, a PUK, a NAC, a first authenticating key or a first authenticating secret.

The second provisioning parameters may comprise at least one of: a host of the apparatus manager, a port of the apparatus manager, a second authenticating key, a second authenticating secret, a name, a type, a profile, a token, a hash, a username or a password.

Provisioning the apparatus to the MNO may comprise configuring the apparatus to be able to connect to the MNO.

Provisioning the apparatus to the apparatus manager may comprise configuring the apparatus to be able to connect to the apparatus manager.

The apparatus may store the MNO profile and the module in a security domain of an eUICC.

The apparatus may store the module inside the MNO profile. That is, the MNO profile and the module may be stored in a same secure element.

The apparatus may store the module outside the MNO profile. That is, the mobile network operator profile and the module may be stored in separate secure elements. The module may be stored in a dedicated secure element rather than within the MNO profile.

Provisioning the apparatus to the apparatus manager using the second provisioning parameters may comprise: sending, from the module to an apparatus manager application running on the apparatus, the second provisioning parameters; and sending, from the apparatus manager application to the apparatus manager, a request to provision the apparatus to the apparatus manager using the second provisioning parameters.

The apparatus may receive, by the module from the apparatus via the SIM manager, an access key to be used by the apparatus manager application for sending data from the apparatus manager application to the apparatus manager; and store, by the module, the access key.

The apparatus may receive, by the module from the apparatus manager application, a request to receive the access key to send data to the apparatus manager; send, from the module to the apparatus manager application, the access key; and send, from the apparatus manager application to the apparatus manager, data using the access key.

The data may comprise telemetry data.

The telemetry data may comprise data collected by sensors of the apparatus.

The telemetry data may comprise a temperature, a pression, a speed, a battery level or a computing power unit load, a key performance indicator or any measurement done by the apparatus.

The apparatus may receive, by the module from the application manager via the SIM manager, configuration parameters. The apparatus may store, by the module, the configuration parameters.

The configuration parameters may be initial configuration parameters (e.g. default configuration parameters).

The configuration parameters may comprise at least one of: a state; a location; an availability; a charging; a model; a serial number; firmware information; or software information.

The apparatus may comprise multiple hardware components, each hardware component running a respective firmware or hardware; and the firmware information or the software information comprises multiple items.

The apparatus may comprise a single hardware component running a firmware or hardware; and the firmware information or the software information comprises a single instance.

The apparatus may receive, by the module, from the SIM manager, an updated configuration parameter or an updated access key. The apparatus may store, by the module, the updated configuration parameter or the updated access key.

The apparatus may receive, by the module, from the SIM manager, updated firmware information or updated software information. The apparatus may store, by the module, the updated firmware information or the update software information.

The apparatus may send, by the module from the apparatus manager application, a notification indicating that the updated firmware information or the update software information is available.

The apparatus may receive, by the module from the apparatus manager application, a request to receive the updated firmware information or the update software information. The apparatus may send, by the module to the apparatus manager application the updated firmware information or the update software information.

In response, the apparatus manager application may receive an updated firmware or an update software identified by the updated firmware information or the update software information and install the updated firmware or the updated software on the component.

The first provisioning parameters, the second provisioning parameters and/or the configuration parameters may be stored as key-value pair attributes.

The apparatus may be an IoT device. The apparatus may be an IIoT device. The apparatus may be a drone or a robot. The apparatus may be autonomous car. The apparatus may be a medical device.

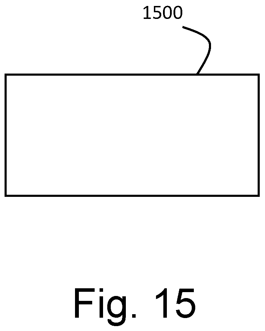

Figure 15 shows a schematic representation of a non-volatile memory medium storing instructions and/or parameters 1500 which when executed by a processor allow the processor to perform one or more of the steps of the method of Figure 14.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Figure 14, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising at least one processor and at least one memory storing instructions that, when executed by the at least one processor, cause the apparatus at least to:
receive, from a subscriber identity module manager, a mobile network operator profile comprising first provisioning parameters to provision the apparatus to a mobile network operator and a module comprising second provisioning parameters to provision the apparatus to an apparatus manager;
provision the apparatus to the mobile network operator using the first provisioning parameters; and
provision the apparatus to the apparatus manager using the second provisioning parameters.

2. The apparatus of claim 1, wherein the module is an applet.

3. The apparatus of claim 1 or claim 2, wherein provisioning the apparatus to the mobile network operator comprises configuring the apparatus to be able to connect to the mobile network operator; and
provisioning the apparatus to the apparatus manager comprises configuring the apparatus to be able to connect to the apparatus manager.

4. The apparatus of any of claims 1 to 3, wherein the at least one memory stores instructions that, when executed by the at least one processor, cause the apparatus at least to:
store the mobile network operator profile and the module in a security domain of an embedded universal integrated circuit card.

5. The apparatus of claim 4, wherein the at least one memory stores instructions that, when executed by the at least one processor, cause the apparatus at least to:
store the module inside the mobile network operator profile.

6. The apparatus of claim 4, wherein the at least one memory stores instructions that, when executed by the at least one processor, cause the apparatus at least to:
store the module outside the mobile network operator profile.

7. The apparatus of any of claims 1 to 6, wherein provisioning the apparatus to the apparatus manager using the second provisioning parameters comprises:
sending, from the module to an apparatus manager application running on the apparatus, the second provisioning parameters; and
send, from the apparatus manager application to the apparatus manager, a request to provision the apparatus to the apparatus manager using the second provisioning parameters.

8. The apparatus of claim 7, wherein the at least one memory stores instructions that, when executed by the at least one processor, cause the apparatus at least to:
receive, by the module from the apparatus via the subscriber identity module manager, an access key to be used by the apparatus manager application for sending data from the apparatus manager application to the apparatus manager; and
store, by the module, the access key.

9. The apparatus of claim 8, wherein the at least one memory stores instructions that, when executed by the at least one processor, cause the apparatus at least to:
receive, by the module from the apparatus manager application, a request to receive the access key to send data to the apparatus manager;
send, from the module to the apparatus manager application, the access key; and
send, from the apparatus manager application to the apparatus manager, data using the access key.

10. The apparatus of claim 9, wherein the data comprises telemetry data.

11. The apparatus of any of claims 1 to 10, wherein the at least one memory stores instructions that, when executed by the at least one processor, cause the apparatus at least to:
receive, by the module from the application manager via the subscriber identity module manager, configuration parameters; and
store, by the module, the configuration parameters.

12. The apparatus of claim 11, wherein the configuration parameters may comprise at least one of:
a state;
a location;
an availability;
a charging;
a model;
a serial number;
firmware information; or
software information.

13. The apparatus of claim 12, wherein the apparatus comprises multiple hardware components, each hardware component running a respective firmware or hardware; and
wherein the firmware information or the software information comprises multiple items.

14. A method comprising:
receiving, from a subscriber identity module manager, a mobile network operator profile comprising first provisioning parameters to provision the apparatus to a mobile network operator and a module comprising second provisioning parameters to provision the apparatus to an apparatus manager;
provisioning the apparatus to the mobile network operator using the first provisioning parameters; and
provisioning the apparatus to the apparatus manager using the second provisioning parameters.

15. A computer program comprising computer executable instructions which when run on one or more processors perform the steps of the method of claim 14.
